# EUROPEAN PATENT APPLICATION

(11) **EP 0 745 424 A1**
(43) Date of publication of application: **04.12.1996**
(21) Application number: 96108563.6
(22) Date of filing: 29.05.1996
(51) Int. Cl.: B01D 71/64, C08G 73/10, B01D 53/22

(54) **Membranes formed from copolyimides**

(30) Priority: 01.06.1995 US 458072
(71) Applicant: AIR PRODUCTS AND CHEMICALS, INC., Allentown, PA 18195-1501 (US)
(72) Inventor: Smith, Carrington Duane, PA 18935 (US); Langsam, Michael, Allentown, PA 18104-2902 (US); Laciak, Daniel Vincent, Allentown, PA 18103 (US); Quinn, Robert, East Texas, PA 18046 (US)
(74) Representative: Sandmair, Kurt, Dr. Dr.

(57) **Abstract**

The present invention is a class of semi-permeable membranes formed of copolyimides characterized in that the imide units which form the polymer are connected by at least two different, yet specific, diamine structures. Membranes formed from these copolyimides exhibit unexpectedly high oxygen selectivity with respect to other atmospheric gases.

## Description

### TECHNICAL FIELD OF THE INVENTION

The present invention relates to polymeric membranes, and more particularly polyimide membranes, which are useful for separating components of a gas mixture.

### BACKGROUND OF THE INVENTION

There is a need for improved polymeric materials that are highly permeable which, under certain conditions, provide selective separation of various gas mixtures. Such materials would be especially useful in commercial, non-cryogenic gas separation processes.

The commercial application for gas separation devices based on polymeric materials relies, in part, on maximizing the overall gas flux through the membrane. P. H. Kim, et al., J. Appl. Poly. Sci., 34 1767 (1987), reported that the gas flux for a membrane is relatable to the average space between the polymer chains. In addition, they indicated that the density of the polymer is also related to the overall gas flux. One challenge for commercial applications is to identify polymers which have both very high flux and good thermo-mechanical properties. It has generally been observed that to achieve high overall flux requires having a polymer with low chain-chain interactions. This can be exemplified by polymers such as poly(dimethylsiloxane) or poly(4-methyl-1-pentene). These materials have rather high gas flux values, but due to their low chain-chain interaction, they also have low glass transition temperatures (Tg). As a consequence, these materials require either special processing conditions to build-in chemical and physiochemical crosslinking or else they can only be used at low application temperatures. By contrast, polymers with strong chain-chain interactions have rather high Tg values but typically exhibit low gas flux.

Polyimides, which generally have strong chain-chain interactions and high Tg values, have been reported to have good gas flux values for certain specific structures. Specifically, U.S. Patent 3,822,202 (1974); Re 30,351 (1980) discloses a process for separating fluids using a semi-permeable membrane made from polyimides, polyesters or polyamides. The repeating units of the main polymer chain of these membranes are distinguished in that such repeating units have at least one rigid divalent subunit, wherein the two main chain single bonds extending from the subunit are not colinear, the subunit is sterically unable to rotate 360° around at least one of these bonds, and has 50% or more of its main chain atoms as members of aromatic rings.

U.S. Patent 4,378,400 discloses gas separation membranes formed from aromatic polyimides based upon biphenyltetra-carboxylic dianhydride for separating various gas mixtures.

U.S. Patent 4,705,540 discloses a highly permeable aromatic polyimide gas separation membrane and processes for using said membrane. The membrane is an aromatic polyimide membrane in which the phenylenediamines are rigid and are substituted on all of the positions ortho to the amino substituents, and the acid anhydride groups are attached to rigid aromatic moieties.

U.S. Patents 4,717,393, 4,717,394 and teach polymeric membranes and processes using the membranes for separating components of a gas mixture. The membranes disclosed in these patents are semi-flexible, aromatic polyimides, prepared by polycondensation of dianhydrides with phenylenediamines having alkyl substituents on all ortho positions to the amine functions, or with mixtures of other, non-alkylated diamines in which some components have substituents on all positions ortho to the amine functions. It is taught that the membranes formed from this class of polyimides exhibit improved environmental stability and gas permeability due to the optimization of the molecular free volume in the polymer. It is also taught that such membranes can be photochemically crosslinked, which in some instances results in a better performing membrane.

M. Salame in Poly. Eng. Sci., 26 1543 (1986) developed a predictive relationship for oxygen permeability coefficient (P(O₂)) and polymer structure. In the publication he demonstrates the group contributions of various structural portions of a polymer to P(O₂) values. In particular he indicates that the presence of an aromatic group, such as phenyl, in place of a methylene (-CH₂-) decreases the P(O₂) values for a pair of comparative polymers.

U. S. Patent 4,897,092 discloses membranes formed from a class of polyimides characterized in that the diamine portion of the polymer structure is an alkylated bisaniline, and the bridging group of the diamine possesses restricted, rotatably rigid substituents. U.S. Patent 4,954,144 discloses membranes formed from polyimides in which the diamine portion of the polymer structure is formed from 2,5-di-t-butyl-1,4-phenylenediamine.

U. S. Patents 4,931,182 and 4,952,220 disclose membranes formed from unsaturated copolyimides. The copolyimides from which the membranes are formed are characterized in that the dianhydride portion of the imide is 6-F dianhydride. In the 4,931,182 Patent, one diamine in the structure is an aromatic diamine and the second diamine is an alkenylated phenylene or diphenylene which contain a vinyl or vinylaryl group. The membranes disclosed in the 4,952,220 Patent are formed from copolyamides in which one diamine is an aromatic diamine and the second diamine is an alkenylated phenylene or diphenylene which contains a vinyl or vinylaryl group.

### SUMMARY OF THE INVENTION

The present invention is a class of membranes formed from copolyimides and a process for using said membranes to separate one or more components of a gas mixture. The copolyimide membranes of the present invention are distinguishable in that the dianhydride portions of the polymer structure are formed from linked dianhydrides wherein the bridging groups are selected from 〉C = 0, 〉SO₂ or 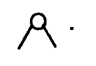 The diamines in these materials are combinations of 1,5-Naphthalenediamine, and/or m-phenylenediamine, and/or mesitylenediamine and/or durenediamine. The copolyimide membranes of the present invention exhibit unexpectedly high oxygen selectivity with respect to other atmospheric gases while maintaining good permeability properties, making them particularly useful in applications for the separation of oxygen or nitrogen from air.

### DETAILED DESCRIPTION OF THE INVENTION

The present invention is a class of polyimide semi-permeable membranes which exhibit unexpectedly high oxygen selectivity with respect to other atmospheric gases, such as nitrogen. The semi-permeable membranes are formed of copolyimides characterized in that the imide units which form the polymer are connected by at least two different, yet very specific, diamine structures. Specifically, it has now been found that, if the membrane is formed of a copolyimide having repeating units formed from a specific group of dianhydrides and connected with two different, yet specific diamines throughout the polymer chain, a polymeric membrane structure having high molecular weight, and hence good mechanical properties, which exhibits oxygen selectivity unexpectedly higher than similar prior art polyimide membranes can be formed. Copolyimides which form the membranes of the present invention can be represented by the general structural formula: 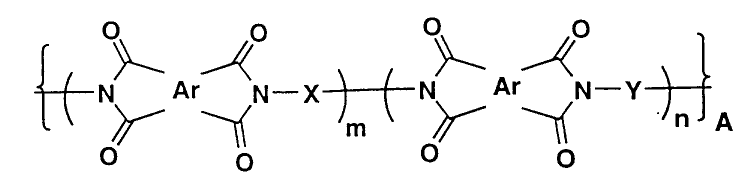 wherein
each Ar is independently 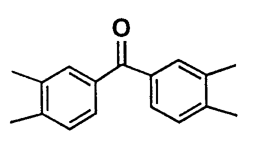 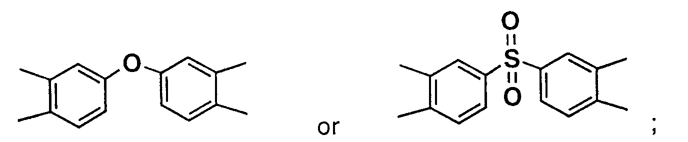 each X is independently 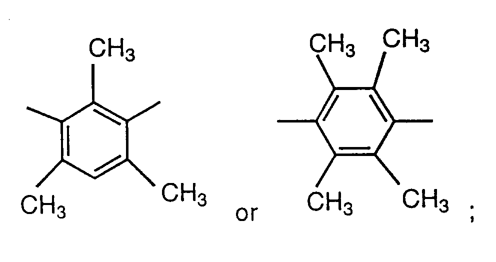 each Y is independently 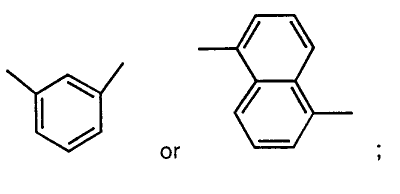 m and n are values such that the ratio m:n is from 3:1 to 1:3.

A can be any value which yields a molecular weight sufficient for film formation. Typically, A can be from about 25 to 200.

The number of repeating units which form the polyimide is not critical; however, the polymer should be of sufficient molecular weight so as to be able to be cast into membrane form. Intrinsic viscosity [ η ] measurements on these random copolyimides were found to be at least 0.4 dl/gm [30°C/DMAc]. The polyimide membrane can be in the form of a flat sheet, spiral wound sheet or hollow fiber, and optionally may be supported on a permeable support material. The membranes can be used for a wide variety of separations and are particularly well suited for separating oxygen from nitrogen or air. In such a process, a feedstream containing at least two components having different permeability rates through the membrane is brought into contact with the membrane whereby the more permeable component permeates the membrane at a faster rate than the other component, thereby separating the components of the feedstream.

The following examples were carried out and are presented to better illustrate the present invention and are not meant to be limiting.

### General Procedures for the Preparation of Polyimide Samples.

The following procedures are representative of all synthetic procedures used to prepare polyimides and their respective samples for gas separation membranes.

### Poly(amic Acid) Preparation.

Into a 4 neck 250ml round bottom flask equipped with an overhead mechanical stirrer, a nitrogen inlet and a condenser were placed the desired amounts of diamine, which were brought into solution or slurry by the addition of NMP. Next, equimolar amounts of dianhydride(s) were added in one portion and washed in with enough additional NMP to effect a total solids concentration of 20 weight %. This mixture was stirred at room temperature for 16 hours to yield-a viscous poly(amic acid) solution.

### Polyimide Preparation.

Acetic anhydride (3 times the number of moles of total anhydride used) and triethylamine (equimolar with acetic anhydride) were added to the above poly(amic acid) solution. The solution was heated to 60°C for two hours and then to 100°C for an additional 30 minutes. The resulting solution was cooled to room temperature and precipitated into about 2 liters of methanol in a high speed commercial blender. Drying at 180°C under full vacuum in an oven for 16 hours afforded 25.0g (99% yield) tan fibrous polyimide.

### Polyimide Film Preparation for Permeability Testing.

A solution of 5.0g of the above polyimide was dissolved in 40ml NMP. After filtration, this viscous solution was poured onto glass plates, which were placed in a vacuum oven at 90°C with a nitrogen purge. A vacuum was applied and the films lifted from the plates after about 3-4 hours. The films were removed and placed on glass plates at 275°C under full vacuum for 16 hours. This process insured films which contained 0.5% or less residual solvent by thermogravimetric analysis. These films were then suitable for testing pure gas permeabilities.

### Examples 1-8

Several copolyimide films were synthesized in accordance with the above procedure and tested for oxygen permeability and O₂/N₂ selectivity. The specific polyimide structure, as well as the results of these tests, are set out below.

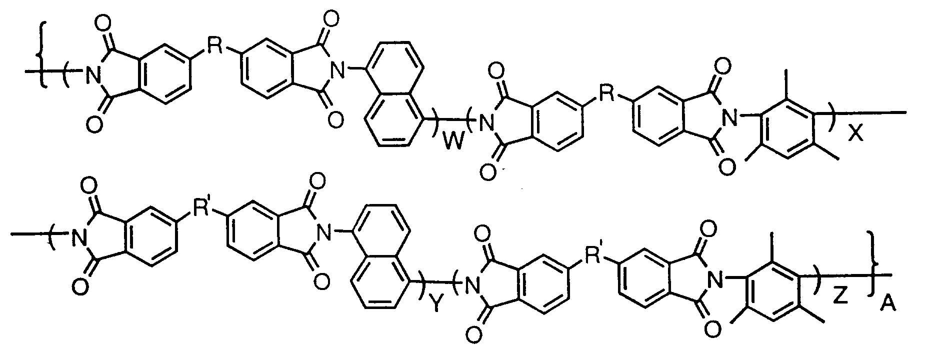

| Example | R | R' | W (mol%) | X (mol%) | Y (mol%) | Z (mol%) | P(O₂) | α(O₂/N₂) | [ η ]¹ |
|---|---|---|---|---|---|---|---|---|---|
| 1 | CO | -- | 50 | 50 | 0 | 0 | 1.98 | 7.38 | |
| 2 | CO | -- | 25 | 75 | 0 | 0 | 4.89 | 6.39 | |
| 3 | SO₂ | -- | 60 | 40 | 0 | 0 | 1.87 | 7.50 | .627 |
| 4 | O | -- | 50 | 50 | 0 | 0 | 3.04 | 6.27 | |
| 5 | CO | SO₂ | 50 | 17 | 25 | 8 | 1.17 | 7.83 | .587 |
| 6 | CO | SO₂ | 24 | 16 | 36 | 24 | 1.90 | 7.70 | .650 |
| 7 | CO | SO₂ | 15 | 10 | 45 | 30 | 1.38 | 7.42 | |
| 8 | CO | SO₂ | 28 | 12 | 42 | 18 | 1.35 | 7.62 | .647 |

| | | | | | | | | | |
|---|---|---|---|---|---|---|---|---|---|
| ¹DMAc/30°C | | | | | | | | | |

The results of these tests show that all of the polyimide films tested exhibited high oxygen selectivity (i.e., high α(O₂/N₂)).

### Example 9 (Comparative)

A comparison was made between the results obtained from the above copolyimides with the results reported in Hayes, U.S. Patent 4,717,394 for the prior art copolyimides. One copolyimide disclosed in the Hayes patent has the structural formula:

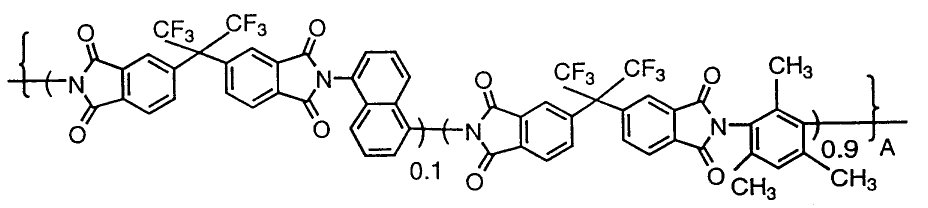

This film is the closest prior art and differs from the films used in Examples 1-3 in that the dianhydride portion contains a C(CF₃)₂ group in place of a CO group as in Examples 1 and 2, or an SO₂ group as in Example 3, and also the ratio of the copolyimide groups is 1:9. Results reported in the Hayes patent on testing this film are P(O₂) = 100 and α(O₂/N₂) = 3.60. These results indicate that the films of the present invention exhibit about twice the oxygen selectivity with respect to nitrogen as the films disclosed by Hayes.

### Example 10 (Comparative)

A second copolyimide film disclosed in the Hayes patent has the structural formula:

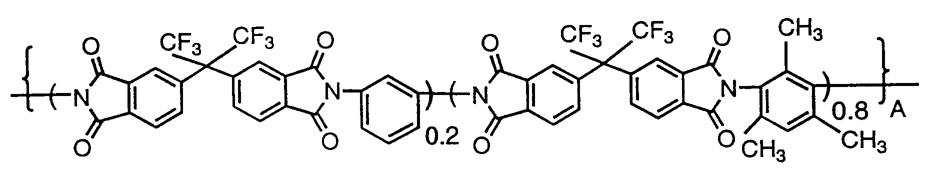

This copolyimide differs from those claimed in the present invention in that the dianhydride portion contains a C(CF₃)₂ group as the bridging group and the ratio of the copolyimide groups is 1:4. Results reported in the Hayes patent on testing this film were P(O₂) = 43 and α(O₂/N₂) = 4.1. As with the copolyimide in Example 9, this copolyimide exhibits significantly lower O₂/N₂ selectivities than the copolyimides of the present invention.

Having thus described the present invention, what is now deemed appropriate for Letters Patent is set out in the following appended claims.

## Claims

1. A semi-permeable membrane formed from a polymer having repeating units represented by the general structural formula: 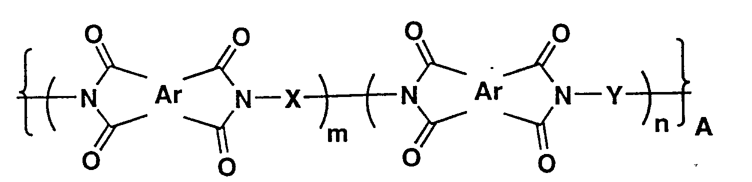 wherein
each Ar is independently 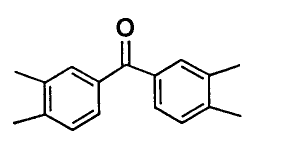 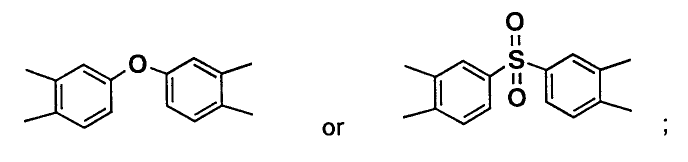 each X is independently 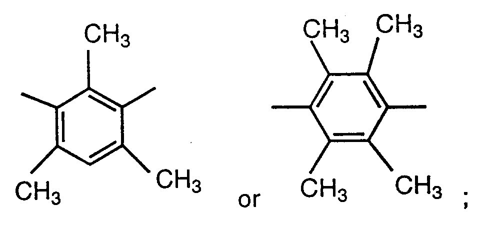 each Y is independently 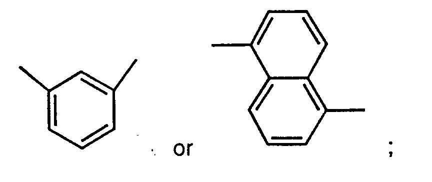 m and n are values such that the ratio m:n is from 3:1 to 1:3, and A is from about 25 to 200.

2. A semi-permeable membrane in accordance with Claim 1 wherein the ratio of m:n is from 2:3 to 3:2.

3. A semi-permeable membrane in accordance with Claim 1 formed from a polymer having repeating units represented by the structural formula: 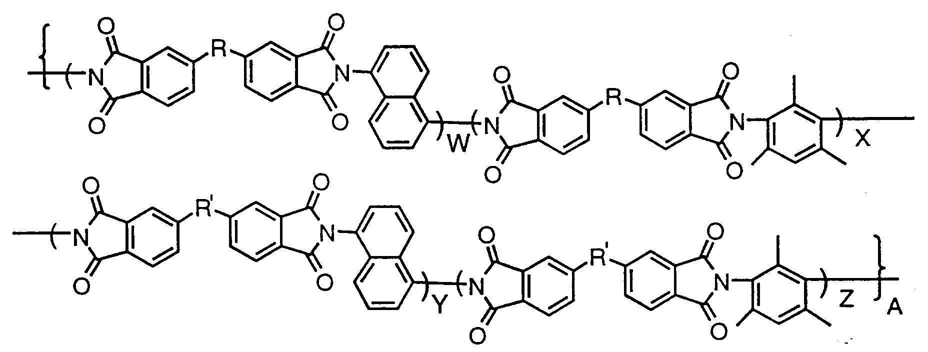 wherein each R is CO, each R' is SO₂, X + Z = M, W + Y = N, in the structure of Claim 1 and A is from about 25 to 200.

4. A semi-permeable membrane in accordance with Claim 1 formed from a polymer having repeating units represented by the structural formula:

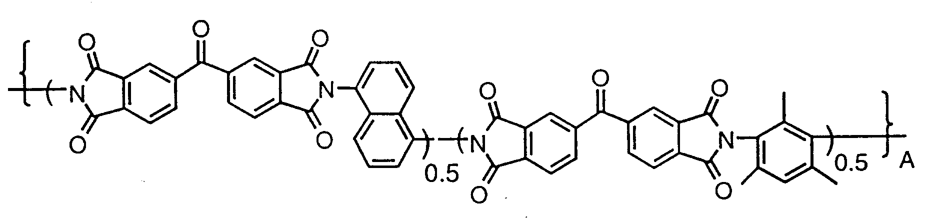

5. A semi-permeable membrane in accordance with Claim 1 formed from a polymer having repeating units represented by the structural formula:

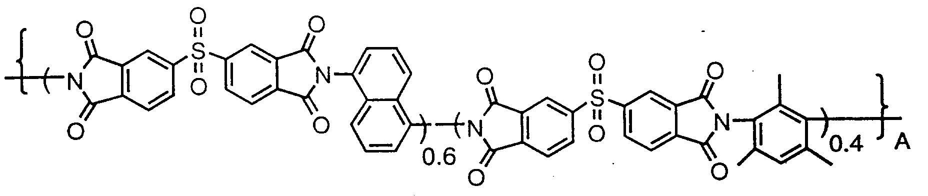

6. A semi-permeable membrane in accordance with Claim 1 formed from a polymer having repeating units represented by the structural formula:

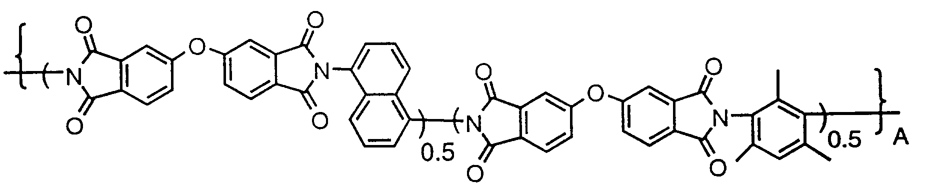

7. A semi-permeable membrane in accordance with Claim 3 wherein W = .24, X = .16, Y = .36 and Z = .24.
